# EUROPÄISCHE PATENTANMELDUNG

(11) **EP 2 736 017 A2**
(43) Veröffentlichungstag der Anmeldung: **28.05.2014**
(21) Anmeldenummer: 13004227.8
(22) Anmeldetag: 27.08.2013
(51) Int. Cl.: G06T 7/20

(54) **Verfahren zur Ermittlung der Bewegung eines Kraftfahrzeugs**

(30) Priorität: 26.11.2012 DE 102012023030
(71) Anmelder: AUDI AG, 85045 Ingolstadt (DE)
(72) Erfinder: Dalbah, Yosef, DE - 85049 Ingolstadt (DE); Roehder, Martin, DE - 85049 Ingolstadt (DE)
(74) Vertreter: Thielmann, Frank

(57) **Zusammenfassung**

Verfahren zur Ermittlung der Bewegung eines Kraftfahrzeugs durch Auswertung mindestens zweier aufeinanderfolgender Aufnahmen mindestens einer am Kraftfahrzeug angeordneten Tiefenbildkamera, wobei jede Aufnahme zumindest ein Distanzbild und ein Amplitudenbild umfasst, umfassend die Schritte:
- Aufnahme von mindestens zwei zeitlich beabstandeten Aufnahmen mit der gleichen Tiefenbildkamera Kamera,
- Bestimmung einer 2D-Punktkorrespondenz zwischen den Amplitudenbildern mindestens zweier Aufnahmen für mindestens zwei Punkte,
- Bestimmung einer 3D-Punktkorrespondenz aus der 2D-Punktkorrespondenz und den Distanzwerten der Distanzbilder der mindestens zwei Aufnahmen für die mindestens zwei Punkte,
- Erzeugung einer 3D-Punktewolke für jede Aufnahme aus den jeweils mindestens zwei Punkten der Aufnahme für die eine 3D-Punktkorrespondenz bestimmt wurde,
- Ermittlung einer Transformation zwischen den mindestens zwei 3D-Punktewolken durch Registrierung der mindestens zwei Punkte der mindestens zwei 3D-Punktewolken, und
- Bestimmung der Bewegung der Kamera und damit des Kraftfahrzeugs zwischen den Aufnahmen aus der Transformation.

## Beschreibung

Die Erfindung betrifft ein Verfahren zur Ermittlung der Bewegung eines Kraftfahrzeugs. Aufgrund der zunehmenden Bedeutung von Fahrassistenzsystemen erhöhen sich auch die Anforderungen an die Genauigkeit von Informationen über die Eigenbewegung eines Fahrzeugs. In heutigen Kraftfahrzeugen werden diese Informationen aus grob aufgelösten Raddrehzahl-, Beschleunigungs- und Drehratensensoren berechnet. Diese Art der Datenermittlung liefert jedoch bei niedrigen Geschwindigkeiten und starkem Lenkeinschlag nur ungenaue Aussagen über die Eigenbewegung des Fahrzeugs.

Verfahren zur visuellen Odometrie aus reinen 2D-Kameradaten sind in der Literatur bekannt (D. Nistér et al. "Visual odometry for ground vehicle applications", Journal of Field Robotics, vol. 23, no. 1, 3 - 20, 2006).

Es ist also Aufgabe der Erfindung ein dem gegenüber verbessertes Verfahren zu visuellen Ermittlung der Fahrzeugbewegung anzugeben.

Die Aufgabe wird erfindungsgemäß durch ein Verfahren zur Ermittlung der Bewegung eines Kraftfahrzeugs durch Auswertung mindestens zwei aufeinander folgender Aufnahmen mindestens einer am Fahrzeug angeordneten Tiefenbildkamera gelöst, wobei jede Aufnahme zumindest ein Distanzbild und ein Amplitudenbild umfasst, umfassend die Schritte:
- Aufnahme von mindestens zwei zeitlich beabstandeten Aufnahmen mit der gleichen Tiefenbildkamera,
- Bestimmung einer 2D-Punktkorrespondenz zwischen den Amplitudenbildern mindestens zweier Aufnahmen für mindestens zwei Punkte,
- Bestimmung einer 3D-Punktkorrespondenz aus der 2D-Punktkorrespondenz und den Distanzwerten der Distanzbilder der mindestens zwei Aufnahmen für die mindestens zwei Punkte,

- Erzeugung einer 3D-Punktewolke für jede Aufnahme aus den jeweils mindestens zwei Punkten der Aufnahme für die eine 3D-Punktkorrespondenz bestimmt wurde,
- Ermittlung einer Transformation zwischen den mindestens zwei 3D-Punktewolken durch Registrierung der mindestens zwei Punkte der mindestens zwei 3D-Punktewolken, und
- Bestimmung der Bewegung der Kamera und damit des Kraftfahrzeugs zwischen den Aufnahmen aus der Transformation.

Der Erfindung liegt die Idee zugrunde, statt üblichen Kameras, die zweidimensionale Bilder liefern, Tiefenbildkamera zu nutzen, die zusätzlich für jeden Pixel eine Tiefeninformation liefern. In den letzten Jahren erfolgten beachtliche Fortschritte bei der Entwicklung von Tiefenbildkamera Kameras, wie beispielsweise die Entwicklung von Time of Flight Kameras mit PMD-Sensoren oder die zunehmende Verbreitung von Tiefenbildkameras, die auf der Projektion von Specklemustern beruhen. Solche Kameras bieten ein großes Potenzial für Applikationen im Bereich der Fahrassistenzsysteme und der integrierten Sicherheitssysteme. Insbesondere PMD-Kameras werden zunehmend kleiner und können höhere Auflösungen erreichen. Es ist damit zu erwarten, dass Tiefenbildkameras zunehmend in der Kraftfahrzeugsensorik genutzt werden. Für das beschriebene Verfahren ist es unwesentlich, welche Art von Tiefenbildkamera genutzt wird. Die Beschreibung bezieht sich vor allem auf die Nutzung von Time of Flight Kameras, es können jedoch auch beliebige andere Tiefenbildkameras genutzt werden, die Tiefeninformationen zur Verfügung stellen. Insbesondere können auch Tiefenbildkameras genutzt werden, die auf der Aufnahme von projizierten Mustern, insbesondere Specklemuster, insbesondere im IR-Bereich, beruhen. Da es sich bei Tiefenbildkamera um ein sich stetig weiter entwickelndes Forschungsfeld handelt, sind hier genannte technische Details bezüglich der Tiefenbildkameras nur beispielhaft aufzufassen.

Um visuelle Daten zur Odometrie zu nutzen, ist es notwendig, Korrespondenzen zwischen Bildern zu erkennen und anschließend eine Transformation zwischen korrespondierenden Features der Bilder zu berechnen. Verfahren zur Bestimmung von Punktkorrespondenzen in 2D-Bildern sind bekannt. Auch Verfahren zur Registrierung von 3D-Punktwolken, das heißt zur Berechnung von Transformationen zwischen diesen 3D-Punktwolken sind bekannt. Eine direkte Nutzung von 3D-Punkten, die aus Distanz und Amplitudeninformationen der Tiefenbildkamera berechnet werden als 3D-Punktwolke ist jedoch problematisch, da eine Vielzahl von Fehlerquellen auftreten.

Um dies zu vermeiden, nutzt das erfindungsgemäße Verfahren einen alternativen Ansatz. Zunächst werden, wie auch bei der rein zweidimensionalen Odometrie, mindestens zwei Bilder aufgenommen, zwischen denen eine Bewegung berechnet werden soll. Die Aufnahme der Bilder erfolgt im erfindungsgemäßen Verfahren jedoch durch eine Tiefenbildkamera. Eine solche Tiefenbildkamera stellt zumindest ein Distanzbild zur Verfügung, in dem für jeden Bildpunkt ein Abstand des Punktes von der Kamera gespeichert ist, wobei der Abstand bei Nutzung einer Time of Flight Kamera einer Laufzeit des Lichts entspricht, sowie ein Amplitudenbild, das einem konventionellen Graustufenbild, in der Regel im Infrarotbereich, entspricht. Wie bereits erwähnt können aus diesen Daten für jedes Bild direkt 3D-Punktewolken berechnet werden. Eine Registrierung dieser Punktewolken gestaltet sich in der Praxis in der Regel problematisch. Daher werden im erfindungsgemäßen Verfahren zunächst 2D-Punktkorrespondenzen berechnet, indem die Amplitudenbilder der mindestens zwei Aufnahmen mit bekannten Verfahren auf 2D-Punktkorrespondenzen untersucht werden. Zur Bestimmung von 2D-Punktkorrespondenzen sind in der Literatur eine Vielzahl von Verfahren bekannt. Im weiteren Text sind einige Möglichkeiten zur Bestimmung dieser Korrespondenzen genannt, diese sollen das Verfahren jedoch nicht einschränken. Prinzipiell kann jedes Verfahren zur Bestimmung von 2D-Punktkorrespondenzen in diesem Schritt genutzt werden, um Korrespondenzen zu ermitteln.

In einem weiteren Schritt werden 3D-Punktekorrespondenzen ermittelt. Hierfür wird das Distanzbild sowie die zuvor ermittelten 2D-Punktekorrespondenzen genutzt. Im Distanzbild ist für jeden Pixel eine Entfernung zum abgebildeten Objekt gespeichert. Gleichzeitig entspricht jeder Pixel einer Kamera, also auch einer Tiefenbildkamera, einem abgebildeten Raumwinkel. Somit ist für jeden Pixel eine Entfernung und ein Raumwinkel bekannt. Das Distanzbild kann also auch als eine Punktewolke verstanden werden. Nun kann für Pixel, für die eine 2D-Korrespondenz festgestellt wurde, eine solche Korrespondenz ebenso für die Pixel im Distanzbild festgestellt werden, die den Pixeln entsprechen für die im Amplitudenbild eine Korrespondenz festgestellt wurde. Nach diesem Schritt liegt also eine Liste von Punktkorrespondenzen für das Distanzbild vor.

Nun wird eine 3D-Punktewolke erzeugt, die ausschließlich aus jenen 3D-Punkten besteht, für die eine Punktkorrespondenz vorliegt. Hier ist es auch vorteilhaft, die Art der Koordinatendarstellung zu wechseln. Wie bereits beschrieben liegt das Distanzbild zunächst in Polarkoordinaten vor. Es sind also Abstände und Winkel gegeben. Für viele Verfahren ist es vorteilhaft, dies nun in kartesische Koordinaten umzurechnen.

Nach diesem Schritt liegt für jede der Aufnahmen eine 3D-Punktewolke vor, wobei für jeden Punkt der 3D-Punktewolke auch eine Punktkorrespondenz zu den Punkten der weiteren 3D-Punktewolken der weiteren Aufnahmen bekannt ist. Zwischen diesen Punktewolken kann nun einfach mit bekannten Verfahren eine Transformation berechnet werden. In der Regel ist es vorteilhaft, hier nur starre Transformationen, das heißt Drehungen und Verschiebungen zu berücksichtigen. Eine Verschiebung oder eine Verzerrung einzelner Objekte im Bild erhöht in diesem Fall ausschließlich den Fehler. Selbstverständlich ist es auch möglich in einem Zwischenschritt Relativbewegungen einzelner Objekte im Bild zu erkennen, und Punkte, die diesen Objekten zuzuordnen sind, von der weiteren Berechnung der Bewegung des eigenen Fahrzeugs auszuschließen.

Aus der Transformation des Bildes kann leicht eine Bewegung der Kamera berechnet werden. Da die Kamera starr mit dem Fahrzeug verbunden ist, lässt sich damit auch eine Fahrzeugbewegung berechnen. Selbstverständlich ist es möglich dieses Verfahren für mehrere Kameras durchzuführen. In diesem Fall können entweder für jede Kamera getrennt Transformationen berechnet werden und die Kameras können nur zur gegenseitigen Validierung genutzt werden, wobei es selbstverständlich möglich ist, bei ähnlichen Ergebnissen Mittelwertberechnung oder ähnliches für die Fahrzeugbewegung zu nutzen, es ist aber auch möglich, dass alle Kamerainformationen zur Bestimmung einer Gesamt-3D-Punktewolke genutzt werden. Die relativen Positionen von Kameras am Kraftfahrzeug sind in der Regel bekannt. Damit kann das Verfahren gleichartig durchgeführt werden, es steigt jedoch die Anzahl der 3D-Punkte für die Punktekorrespondenzen vorliegen. Damit kann ein robusteres Verfahren erreicht werden.

Auch eine Nutzung von mehr als zwei Aufnahmen einer Tiefenbildkamera ist möglich. Im einfachsten Fall werden jeweils nur Korrespondenzen zwischen zwei benachbarten Bildern berechnet. Es ist aber auch möglich, beispielsweise einen optischen Fluss über mehrere Aufnahmen hinweg zu berechnen oder Korrespondenzen zwischen einer Vielzahl von Bildpaaren zu berechnen. Auch damit kann ein robusteres Verfahren erreicht werden.

Vorteilhaft ist es, wenn vor dem Schritt der Bestimmung einer 2D-Punktkorrespondenz das Amplitudenbild geglättet wird, insbesondere unter Verwendung eines bilateralen Filters. Durch die Glättung des Bildes kann das Bildrauschen verringert werden, wobei dennoch besondere Merkmale des Bildes, die zur Berechnung von Korrespondenzen genutzt werden können, erhalten bleiben. Die bilaterale Filterung nutzt neben dem Ortsabstand auch den Farb- bzw. Helligkeitsabstand zur Gewichtung, wie stark ein Punkt in die Mittelung einbezogen wird. Wesentlicher Vorteil ist hier, dass bei dieser Art der Filterung Objektkanten erhalten werden. Damit ist eine besonders zuverlässige Erkennung von Merkmalen im Bild möglich.

Viele Tiefenbildkameras stellen zusätzlich zum Amplitudenbild und dem Distanzbild für jeden Pixel auch ein Gültigkeits-Flag zur Verfügung, das anzeigt, ob die Distanzinformation des entsprechenden Pixels gültig ist. In diesem Fall kann vor dem Bestimmen der 3D-Punktekorrespondenz ein Gültigkeitsprüfungsschritt erfolgen, in dem für jeden Punkt jeder Aufnahme ein durch die Kamera gesetztes Gültigkeits-Flag ausgewertet wird und Punkte mit nicht gesetztem Gültigkeits-Flag als ungültig markiert und im weiteren Verfahren nicht berücksichtigt werden. Durch diesen Schritt können Punkte, bei denen Erkennbar ist, dass die Entfernungsinformation nicht zutrifft, von Anfang an aus dem Verfahren ausgeschlossen werden, wodurch eine Verbesserung der Korrespondenzberechnung und damit auch eine Verbesserung der Bewegungsberechnung erreicht wird.

Eine problematische Eigenschaft von Tiefenbildkameras ist, dass Entfernungsmessungen an Objektkanten häufig unzuverlässig sind. Da hier in einem Pixel sowohl Licht vom Objekt, als auch von der dahinterliegenden Umgebung detektiert wird, ist eine klare Bestimmung der Entfernungsinformation nicht möglich. Damit kommt es zur sogenannten "flying pixel" die in der Regel zwischen dem nahen und dem entfernten Objekt liegen. Zwischen Bildern kann die Position dieser "flying pixel" stark variieren, daher sind solche Pixel bei der Berechnung der Transformation hinderlich. Daher ist es vorteilhaft, wenn vor dem Schritt der Bestimmung der 3D-Punktkorrespondenz ein Kantenentfernungsschritt erfolgt, in dem mit einem Kantendetektionsalgorithmus, insbesondere einem Sobel-Kantendetektor, Kanten im Distanzbild detektiert werden und die an diesen Kanten liegenden Punkte als ungültig markiert und im weiteren Verfahren nicht berücksichtigt werden. Durch die Entfernung von Punkten, die an Kanten im Distanzbild liegen, werden die "flying pixel" bei der Bestimmung der Transformation zwischen den Abbildungen ausgeschlossen. Dies ist wünschenswert, da die Positionen dieser Pixel wie oben beschrieben besonders fehleranfällig sind. Prinzipiell kann jede Art der Kantendetektion genutzt werden. Besonders einfach ist jedoch ein Sobel-Kantendetektor. Hier wird das Bild mit einer Matrix gefaltet, die eine Ableitung des Bildes in eine Richtung und eine Mittelung in die orthogonale Richtung beschreibt. Im resultierenden Bild beschreiben besonders hohe Werte Kanten. Zur klareren Bestimmung kann anschließend eine Schwellwertfunktion genutzt werden.

Zur Bestimmung der 2D-Punktkorrespondenz ist eine Vielzahl von Verfahren bekannt. Insbesondere kann die Bestimmung einer 2D-Punktkorrespondenz durch Merkmalsdetektion mit einem SURF-Verfahren und anschließender Abgleichung der SURF-Deskriptoren oder einem Good Features to Track Ansatz, wobei Shi-Tomasi Merkmale detektiert und die Korrespondenz durch Berechnung eines optischen Flusses nach der Lucas-Kanade-Methode bestimmt wird, erfolgt. Das SURF-Verfahren (SURF= speeded up robust features (beschleunigte, robuste Merkmale)) ist eine Weiterentwicklung der skaleninvarianten Merkmalstransformation zur schnellen und robusten Erkennung von Bildmerkmalen für maschinelles Sehen. Die in der skaleninvarianten Merkmaltransformation genutzten Gausfilter werden in SURF durch einen Mittelwertsfilter ersetzt. Damit kann eine schnellere Berechnung erreicht werden. In diesem Verfahren werden Merkmale erkannt und für jedes Merkmal ein Merkmalsvektor berechnet, der weitgehend invariant gegenüber Skalierung, Orientierung und affinen Verzerrungen ist. Werden diese Merkmale für die Amplitudenbilder mehrerer Abbildung berechnet, so können die Merkmale zwischen Bildern verglichen werden und damit können Punkte miteinander identifiziert werden.

Insbesondere bei geringer Veränderung der Kameraposition und damit des Bildinhaltes kann alternativ oder ergänzend auch der optische Fluss berechnet werden. Hierzu müssen zunächst Merkmale bestimmt werden, die gut nachverfolgt werden können. Häufig werden bei maschinellem Sehen hierfür Ecken detektiert, was beispielsweise nach dem Shi-Tomasi Algorithmus erfolgen kann. Selbstverständlich sind auch andere Möglichkeiten der Merkmalerkennung möglich. Sind diese Merkmale bekannt, so kann die Verschiebung zwischen zwei Bildern berechnet werden. Die Lucas-Kanade-Methode geht hierbei davon aus, dass die Verschiebung zwischen Bildern in der Nachbarschaft eines Pixels im Wesentlichen für alle Pixel gleich ist. Gegenüber Methoden, die einen optischen Fluss für Einzelpixel berechnen ist die Lucas-Kanade-methode robuster. Aus dem berechneten optischen Fluss können anschließend wieder Korrespondenzen bestimmt werden.

Zur Registrierung der 3D-Punktewolken und zur Berechnung einer Transformation zwischen diesen beiden Punktewolken sind eine Vielzahl von Verfahren denkbar. Es ist jedoch vorteilhaft, wenn die Registrierung zwischen den mindestens zwei 3D-Punktewolken durch eine Transformation mindestens einer der mindestens zwei 3D-Punktewolken mit einem Quaternionenbasierten Verfahren erfolgt, wobei die optimale Transformation durch eine Minimierung der Standardabweichung bestimmt wird. Quaternionen erlauben eine besonders elegante Darstellung des dreidimensionalen Raums, insbesondere im Kontext von Drehungen. Für Berechnungen von Drehungen sind durch Verwendung von Quaternionen weniger Operationen notwendig als bei einer Drehungsbrechung durch Matrizen. Da eine Vielzahl von möglichen Transformationen berechnet werden soll, um die optimale Transformation zu finden, ist dieser Effektivitätsgewinn sehr vorteilhaft.

Zur Ermittlung der optimalen Transformation muss berücksichtigt werden, dass, da zwischen zwei fehlerbehafteten Abbildungen transformiert wird, in der Regel keine Transformation möglich ist, die die 3D-Punktewolke einer Abbildung fehlerfrei in eine 3D-Punktewolke einer anderen Abbildung überführt. Daher wird zur Ermittlung der optimalen Abbildung die Standardabweichung zwischen den Punktpositionen der transformierten 3D-Punktewolken berechnet. Es wird als ein Optimierungsverfahren durchgeführt, in dem die Standardabweichung der Punktpositionen minimiert wird, wobei die Parameter der Rotationen und Translationen variiert werden. Es ist selbstverständlich möglich, in diesem Verfahren bereits Einschränkungen, die sich aus der Natur der Fahrzeugbewegung ergeben zu nutzen. So kann beispielsweise genutzt werden, dass eine Rotation des Kraftfahrzeugs über einen gewissen Winkel hinaus in der Regel nahezu ausschließlich um die Hochachse erfolgt. Auch eine reine Seitwärts- oder Auf- und Abbewegung kann in der Regel ausgeschlossen werden. Es ist selbstverständlich auch möglich in diesem Schritt zusätzliche Informationen zu nutzen, die durch weitere Kraftfahrzeugsensoren ermittelt werden. So kann beispielsweise eine aus einer konventionellen Kraftfahrzeugodometrie bestimmte Veränderung der Fahrzeugposition als Startwert für die Transformationsoptimierung genutzt werden.

Auch wenn in vorhergehenden Schritten bereits ungültige Pixel wie auch solche Pixel, die an Kanten im Distanzbild liegen verworfen wurden, und somit nicht Teil der 3D-Punktewolke sind, ist es bei Distanzmessungen mit einer Tiefenbildkamera dennoch möglich, dass einzelne Punkte in der 3D-Punktewolke stark von ihrer tatsächlichen Position abweichen. Insbesondere durch Berücksichtigung der Fehlerquadrate in der Standartabweichung können einzelne oder wenige starke Ausreißer in den Messwerten das Ergebnis stark beeinflussen. Daher ist es vorteilhaft, wenn jede 3D-Punktewolke mindestens drei Punkte umfasst und bei der Bestimmung der Transformation ein großes RANSAC-Algorithmus verwendet wird. Beim RANSAC-Algorithmus (RANSAC= random sample consensus (Übereinstimmung mit einer zufälligen Stichprobe)) werden in mehreren Iterationen zufällige Teilmengen der Korrespondenzen ausgewählt und aufeinander registriert. Anschließend werden für jede der so bestimmten Transformationen die Abweichungen aller 3D-Punkte zwischen den Punktewolken bestimmt. Überschreitet die Abweichung einen gewissen Schwellenwert, wird der Punkt als Ausreißer für diese Transformation festgelegt. Die Punkte, die keine Ausreißer sind bilden das sogenannte "consensus set". Nach mehreren Wiederholungen der aus Teilmengen der Punktkorrespondenzen berechneten Transformationen wird das größte "consensus set" gewählt und zur Berechnung der optimalen Transformation genutzt.

Es kann insbesondere eine Time of Flight Kamera als Tiefenbildkamera verwendet werden.

Neben dem erfindungsgemäßen Verfahren betrifft die Erfindung ein Kraftfahrzeug, umfassend eine Recheneinrichtung und mindestens eine Tiefenbildkamera, wobei die Recheneinrichtung zur Durchführung eines Verfahrens nach den vorangehenden Ansprüchen ausgebildet ist. Dabei kann die die Tiefenbildkamera eine Time of Flight Kamera sein, insbesondere eine Time of Flight Kamera, die einen PMD-Sensor als Bildsensor umfasst. PMD-Sensoren basieren auf einer Modulation der Lichtquelle mit Radiofrequenzen, also im oberen Kilohertz- bis unteren Gigahertzbereich. Wird die Amplitude ausreichend schnell gemessen kann, beispielsweise durch einen Log-in-Verstärker, die Phasenverschiebung der Modulation bei Empfang gemessen werden. Aus dem Phasenunterschied kann zwischen ausgesendetem und empfangenen Signal kann eine Laufzeit und damit eine Distanz bestimmt werden.

Weitere Vorteile und Einzelheiten ergeben sich aus den folgenden Ausführungsbeispielen und den zugehörigen Zeichnungen. Dabei zeigen:
- Fig. 1: ein Ausführungsbeispiel eines erfindungsgemäßen Kraftfahrzeugs,
- Fig. 2: eine schematische Übersicht über das erfindungsgemäße Verfahren,
- Fig. 3: einen schematischen Überblick über die 2DKorrespondenzsuche,
- Fig. 4: einen schematischen Überblick über die Vorverarbeitung des Distanzbilds jeder Abbildung,
- Fig. 5: eine Fahrsituation,
- Fig. 6: eine weitere Fahrsituation,
- Fig. 7: das durch die Tiefenbildkamera aufgenommene Amplitudenbild einer in der Fahrsituation in Fig. 5 aufgenommenen Aufnahme, und
- Fig. 8: das Amplitudenbild einer in der Fahrsituation in Fig. 6 aufgenommenen Aufnahme.

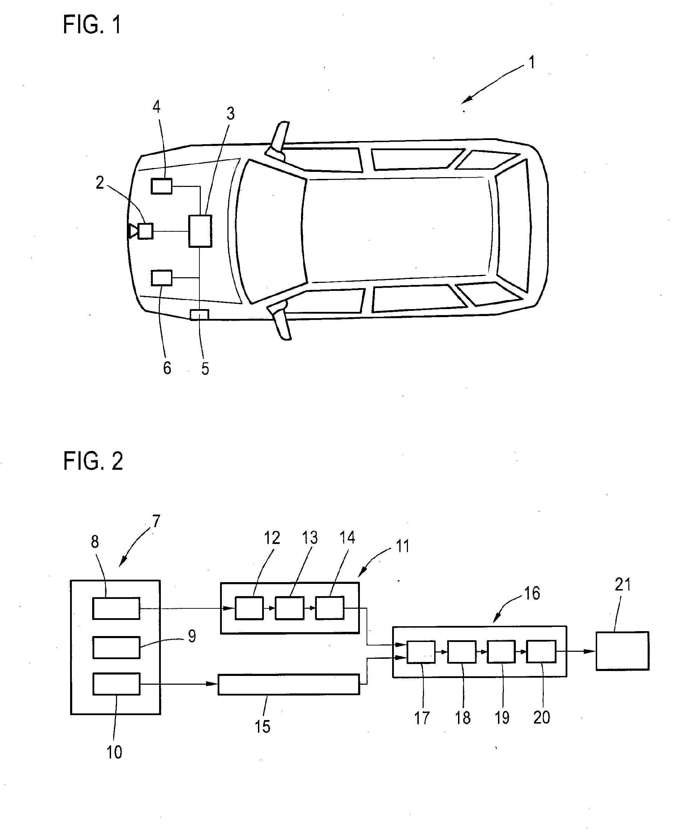

Fig. 1 zeigt ein Ausführungsbeispiel eines Kraftfahrzeugs, das zur Ermittlung der Bewegung des Kraftfahrzeugs durch Auswertung zweier aufeinanderfolgender Aufnahmen der am Kraftfahrzeug 1 angeordneten Tiefenbildkamera ausgebildet ist. Im Frontbereich des Kraftfahrzeugs 1 ist eine Tiefenbildkamera, die als Time of Flight Kamera 2 ausgebildet ist, angeordnet. Diese ist über einen nicht gezeigten CAN-Bus mit einer Recheneinrichtung 3 verbunden. Ebenso sind weitere Sensoren, wie ein Drehratensensor 4, ein Raddrehsensor 5 und ein Beschleunigungssensor 6 über den CAN-Bus mit der Recheneinrichtung 3 verbunden. Zudem weist das Kraftfahrzeug 1 zahlreiche Fahrassistenzsysteme auf, die Odometriedaten nutzen. Das Kraftfahrzeug 1 kann zum einen, wie herkömmliche Kraftfahrzeuge mit Hilfe der Recheneinrichtung 3 Odometriedaten aus den Daten des Drehratensensors 4, des Raddrehsensors 5 und des Beschleunigungssensors 6 bestimmten.

Ergänzend können auch Informationen eines nicht gezeigten Positionssensors, beispielsweise eines GPS-Sensors oder anderer Fahrzeugsysteme genutzt werden. Ergänzend können im Kraftfahrzeug 1 jedoch Odometriedaten aus den Bildern der Time of Flight Kamera 2 gewonnen werden. Die Time of Flight Kamera 2 ist hier als PMD-Sensor ausgebildet. Dies bedeutet, dass eine nicht gezeigte nach vorne gerichtete Infrarotwelle im Radiobereich amplitudenmoduliert ist. Hier ist die Infrarotquelle mit einer Frequenz von einem Megahertz amplitudenmoduliert. Sogleich wird über einen zweikanaligen Log-in-Verstärker für jeden Pixel der Time of Flight Kamera eine Amplitude und eine Phasenlage zum ausgesendeten Infrarotsignal bestimmt. Bei der hier verwendeten Modulationsfrequenz von einem Megahertz entsprechen die gemessenen Phasenverschiebungen von bis zu 360° einem Zeitintervall von ca. einer Mikrosekunde, das heißt einer Distanz von ca. 300 m. Dies bedeutet, dass Entfernungen innerhalb von 300 m eindeutig bestimmt werden können. Eine solche Entfernung ist in der Regel ausreichend, da weiter entfernte Objekte nur noch schwach von der am Fahrzeug angeordneten Infrarotquelle angestrahlt werden.

Mit der Time of Flight Kamera 2 werden kontinuierlich Bilder aufgenommen. Aus jeweils zwei aufeinander folgenden Bildern wird eine Bewegung zwischen den Bildern bestimmt. Um einen Ausgangswert zur Bestimmung der optimalen Transformation durch die Recheneinrichtung zu erhalten können die grob aufgelösten, konventionell ermittelten Odometriedaten genutzt werden. Die tatsächliche Ermittlung der Bewegung der Time of Flight Kamera 2 und damit des Kraftfahrzeugs 1 aus zwei aufeinander folgenden Bildern der Tiefenbildkamera in der Recheneinrichtung 3 wird im Folgenden detailliert erläutert.

Fig. 2 gibt einen Überblick über das Verfahren. Als Eingabe für das Verfahren werden die Sensordaten 7 genutzt. Die Sensordaten 7 umfassen zwei Aufnahmen der Tiefenbildkamera, wobei für jede Tiefenbildkamera mehrere Teilinformationen vorhanden sind. So wird durch die Tiefenbildkamera ein Amplitudenbild 8 erzeugt, das die Helligkeitsverteilung im Bild beschreibt. Zusätzlich wird auch ein Distanzbild 10 erzeugt, das die Distanz zwischen dem abgebildeten Objekt und der Kamera angibt. Diese Werte korrespondieren zu Lichtlaufzeiten zwischen Objekt und Kamera, die jedoch aufgrund der konstanten Lichtgeschwindigkeit direkt in eine Entfernung umgerechnet werden können. Zusätzlich stellen Tiefenbildkameras häufig ein Gültigkeits-Flag für jeden Punkt des Distanzbildes zur Verfügung. Ist dieses Flag nicht gesetzt, so wurde bereits in der Kamera detektiert, dass die Distanzinformation im Distanzbild für diesen Pixel nicht zutreffend ist. Zunächst soll die 2D-Datenverarbeitung 11 beschrieben werden. Diese nutzt ausschließlich die Daten des Amplitudenbilds 8. Im ersten Schritt 12 der 2D-Datenverarbeitung 11 wird das Amplitudenbild 8 geglättet. Das Glätten erfolgt hier mit einem bilateralen Filter, der bei der Berechnung eines neuen Amplitudenwertes für einen Pixel die benachbarten Pixel, gewichtet durch ihre Entfernung und die Abweichung in der Amplitude, mit berücksichtigt. Das Glätten verbessert die anschließende Merkmalsdetektion. Im zweiten Schritt 13 werden Merkmale detektiert und im dritten Schritt 14 die Korrespondenzen zwischen den Merkmalen bestimmt. Diese Schritte werden später detailliert erläutert.

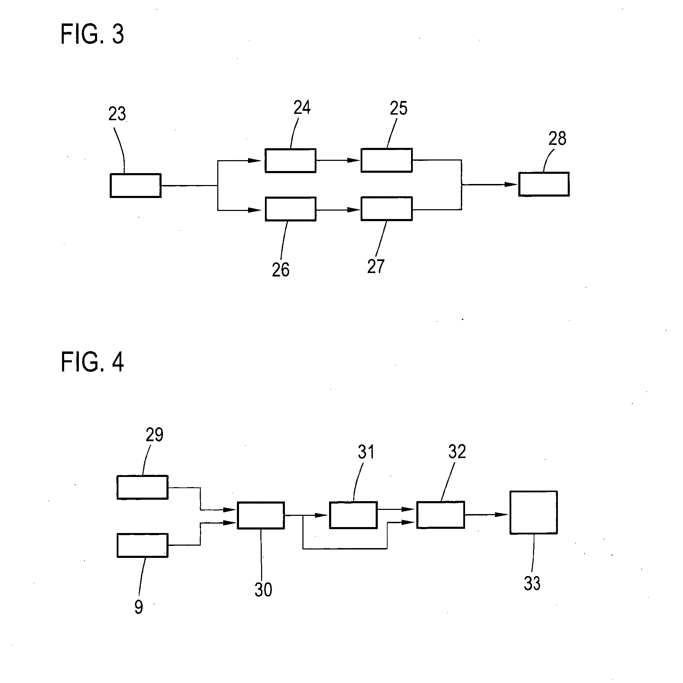

Parallel zur 2D-Datenverarbeitung 11 folgt auch eine Berechnung von 3D-Punkten 15. In diesem Schritt werden die Daten eines Distanzbildes, die eine Entfernung angeben, wobei jeder Pixel einem Raumwinkel entspricht, in kartesische Koordinaten umgerechnet. Dies erleichtert die spätere Weiterverarbeitung. Anschließend an diesen Schritt kann ein Schritt der Vorverarbeitung der 3D-Daten erfolgen, der in Fig. 4 getrennt dargestellt ist.

Nach der Berechnung der 3D-Punkte 15 und der 2D-Datenverarbeitung 11 erfolgt die gemeinsame Weiterverarbeitung dieser beiden Datenströme im 3D-Datenverarbeitungsblock 16. In diesem Block wird aus den beiden Eingangsströmen eine Bewegungsinformation der Kamera bestimmt. Im 3D-Datenverarbeitungsblock 16 werden im ersten Schritt 17 zunächst 3D-Punktekorrespondenzen bestimmt. Dies erfolgt, in dem die in der der 2D-Datenverarbeitung 11 bestimmten Korrespondenzen auf die korrespondierende Punkte der 3D-Punkteberechnung 15 übertragen werden. Das Ergebnis dieser Berechnung ist also eine Liste von 3D-Punktkorrespondenzen zwischen zwei Aufnahmen. Im zweiten Schritt 18 wird aus den Punkten, für die eine 3D-Punktkorrespondenz vorliegt, für jede Aufnahme eine 3D-Punktewolke erzeugt. Es liegen also nach diesem Schritt 18 zwei 3D-Punktewolken vor, wobei jeder Punkt in jeder dieser Punktewolken einen korrespondierenden Punkt in der anderen Punktewolke aufweist. Jeder Punkt in der 3D-Punktewolke der ersten Aufnahme ist also eindeutig einem Punkt der 3D-Punktewolke der zweiten Aufnahme zugeordnet.

Im dritten Schritt 19 wird eine Transformation zwischen den beiden 3D-Punktewolken berechnet, die zu einer möglichst guten Registrierung der Punktewolken führt. Hierzu wird eine 3D-Punktwolke unverändert gelassen, während die andere 3D-Punktewolke durch die Anwendung von Quaternionenoperatoren transformiert wird. Hier komm ein RANSAC-Verfahren zum Einsatz. Es werden also einige Punkte der zu transformierenden 3D-Punktewolke ausgewählt und es wird eine optimale Transformation dieser einigen Punkte berechnet. Die Bestimmung, welche der Transformationen optimal ist, wird die Standardabweichung berechnet. Anschließend wird die Standardabweichung nach der Transformation für alle Punkte, also auch für die Punkte, die bei der Bestimmung der Transformation nicht berücksichtigt wurden, berechnet. Punkte, die hier stark abweichen werden als Ausreißer bezeichnet, die anderen als "consensus group". Dieser Schritt wird mehrfach für zufällig ausgewählte Punktgruppen wiederholt. Es wird versucht, eine möglichst große "consensus group" zu erreichen. Die größte "consens group" wird dann zur endgültigen Berechnung der optimalen Transformation genutzt.

In Schritt 20 kann dann einfach eine Bewegung der Kamera, und damit des Kraftfahrzeugs, berechnet werden, indem die Bewegung des Koordinatensystems bestimmt wird, die der in Schritt 19 bestimmten Transformation der Objektpositionen entspricht. Die ermittelten Bewegungsdaten können anschließend in Schritt 21 weiter verarbeitet werden, indem sie durch weitere Odometrieinformationen validiert und anschließend von Fahrzeugsystemen genutzt werden.

In Fig. 3 sind die Schritte der Merkmalsdetektion 13 und Korrespondenzsuche 14 der Fig. 2 nochmals detailliert dargestellt. Als Eingangsdaten werden hier die bereits geglätteten Amplitudenbilder 23 genutzt. Beide Bilder werden parallel in zwei Zweigen weiterverarbeitet. Im oberen Zweig, umfassend die Schritte 24 und 25 erfolgt eine Bestimmung der 2D-Punktkorrespondenz durch Merkmalsdetektion mit einem SURF-Verfahren im Schritt 24 und anschließendes Abgleichen der Deskriptoren in Schritt 25. Im zweiten Zweig wird ein Good Features to Track Ansatz durchgeführt, in dem in Schritt 26 Shi-Tomasi Merkmale detektiert werden und im Schritt 27 ein optischer Fluss berechnet wird. Die einzelnen verwendeten Algorithmen sind im Bereich des maschinellen Sehens bekannt und sollen daher hier nicht detailliert erläutert werden. Wichtig ist, dass bei der Detektion der SURF-Merkmale in Schritt 24 Merkmale ermittelt werden, die im Wesentlichen invariant gegenüber Rotation, Skalierung und affiner Verzerrung sind. Diese Merkmale können also auch bei einer relativ großen Veränderung zwischen den Bildern in Schritt 25 entsprechend zugeordnet und erkannt werden. Der obere Verarbeitungszweig erkennt also besonders klare Merkmale, kann diese aber auch bei starken Veränderungen gut wiedererkennen und zuordnen. Im unteren Zweig werden in Schritt 26 Shi-Tomasi Merkmale erkannt, das heißt Ecken detektiert. Ist die Veränderung zwischen zwei aufeinander folgenden Aufnahmen nicht zu groß, so kann in Schritt 27 durch die Lucas-Kanade-Methode ein optischer Fluss, das heißt die Bewegung der einzelnen Bildpunkte berechnet werden. Aus der dann bekannten Bewegung der einzelnen Bildpunkte kann wiederum eine Zuordnung von einzelnen Bildpunkten zwischen den beiden Aufnahmen erfolgen. In Schritt 28 werden dann die in beiden Verfahren bestimmten Korrespondenzen gesammelt und es wird eine Liste von 2D-Korrespondenzen erstellt. Als Format der Liste kann beispielsweise vorgesehen sein, Indexwertpaare anzugeben, die jeweils einen Indexwert, das heißt eine Bildposition im ersten Amplitudenbild und im zweiten Amplitudenbild angegeben. Alternativ zur einfachen Zusammenführung der Korrespondenzen können die einzelnen Korrespondenzen auch gewichtet werden oder es kann nur einer der beiden Zweige genutzt werden.

In Fig. 4 ist die Vorverarbeitung der 3D-Punktedaten gezeigt. In diesem Ausführungsbeispiel erfolgt die Vorverarbeitung nach Schritt 15, der Berechnung von 3D-Punkten. Prinzipiell kann diese Berechnung jedoch auch schon mit den Daten der Distanzbilder 10, das heißt vor Schritt 15, also der Berechnung von 3D-Punkten erfolgen. Als Eingangsdaten werden hier die in Schritt 15 berechneten 3D-Punkte, sowie das den Sensordaten 7 entnommenen Gültigkeits-Flag 9 für jeden der Punkte entnommen. Es soll angemerkt werden, dass hier selbstverständlich wiederum die 3D-Punkte aus zwei Aufnahmen gleichzeitig verarbeitet werden. Für jeden der 3D-Punkte 29 wird das zugeordnete Gültigkeits-Flag 9 gelesen und in Schritt 30 werden 3D-Punkte 29 als ungültig gekennzeichnet und im weiteren Verfahren nicht mehr genutzt, für die das Gültigketis-Flag 9 nicht gesetzt ist. Statt einer Markierung als ungültig können diese Punkte auch aus der Punkteliste entfernt werden.

In Schritt 31 werden dann Kanten in dem 3D-Bild, dass aus den 3D-Punkten 29 besteht die aus dem Distanzbild 10 ermittelt wurden, detektiert. Zur Kantendetektion kann beispielsweise ein Sobel-Kantendetektor genutzt werden. Hier erfolgt eine Faltung der Eingangsdaten mit einer Matrix, die einer Ableitung in eine Bildrichtung und einer Mittelung in der dazu senkrechten Bildrichtung entspricht. Anschließend werden mit einer Schwellwertbestimmung jene Pixel bestimmt, bei denen die Anwendung des Sobel-Operators zur Überschreitung eines gewissen Minimalwerts führt. Der Sobel-Kantendetektor kann in zwei senkrecht zueinander stehenden Richtungen genutzt werden und es können Punkte, die in einem der beiden Resultatbilder einen Schwellwert übersteigen als Kanten markiert werden. Alle jene Punkte, die als Kante markiert wurden werden in Schritt 32 entweder als ungültig markiert oder aus der Punkteliste entfernt. Die weiterhin gültigen bzw. vorhandenen 3D-Punkte werden anschließend in Schritt 33 weiterverarbeitet. Dies kann beispielsweise der Schritt 17 der Fig. 2 sein.

Die in Fig. 4 gezeigten Schritte werden durchgeführt, um eine bessere Reproduzierbarkeit der 3D-Punkte zu erreichen. Hierfür ist es selbstverständlich notwendig, solche Punkte zu verwerfen, bei denen schon bei der Bildaufnahme in der Tiefenbildkamera festgestellt wurde, dass die Distanzwerte nicht gültig sind. Zudem können auch Distanzwerte an Kanten zu einer schlechten Reproduzierbarkeit der 3D-Punktkoordinate führen. Hier kann es sein, dass sowohl Licht, das von einem Objekt im Vordergrund reflektiert wird, als auch Licht, dass von einem Objekt im Hintergrund reflektiert wird, im gleichen Pixel eintrifft. Damit wird normalerweise eine Entfernung zwischen den beiden Objekten ermittelt. Hierbei können jedoch bei geringfügigsten Veränderungen im Bild große Sprünge der detektierten Entfernung auftreten. Dies kann die anschließende Ermittlung der korrekten Transformation stören, insbesondere da solche Kanten bei der 2D-Merkmalsdetektion besonders stark bewertet werden können. Daher werden diese Punkte entfernt.

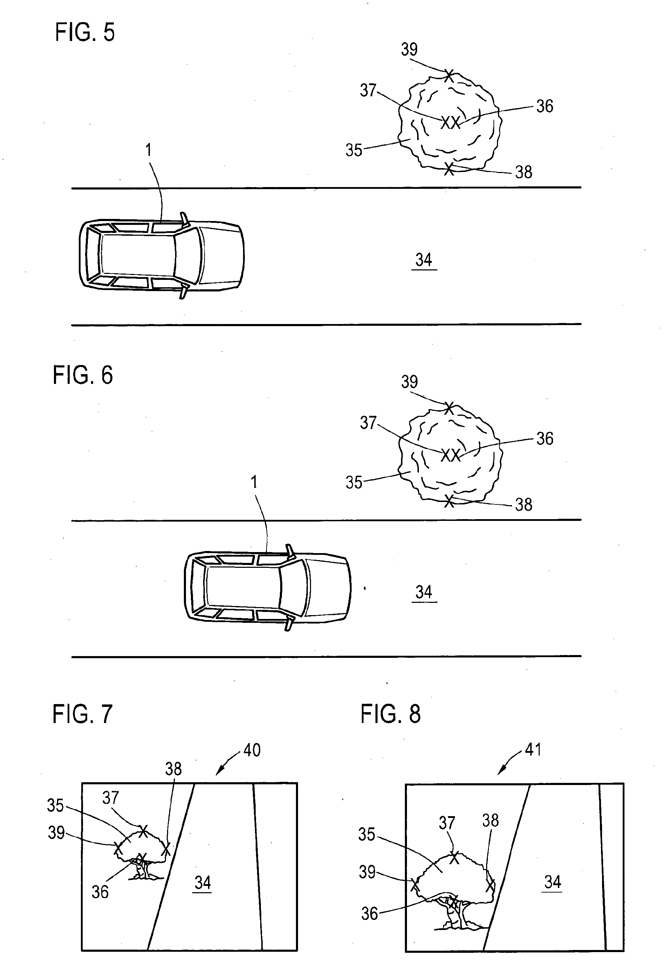

Die Funktion des Verfahrens soll nun an einem sehr einfachen Beispiel geschildert werden. Fig. 5 zeigt eine Verkehrssituation, in der ein Kraftfahrzeug 1 auf einer Straße 34 entlang fährt. In einiger Entfernung vor dem Kraftfahrzeug befindet sich ein Baum 35. Fig. 6 zeigt die gleiche Verkehrssituation etwas später. Das Kraftfahrzeug 1 hat sich auf der Straße 34 näher an den Baum 35 heranbewegt. Sowohl in der Situation in Fig. 5 als auch in der Situation in Fig. 6 wurde durch eine nicht gezeigte Tiefenbildkamera ein Frontbereich des Kraftfahrzeugs 1 eine Aufnahme angefertigt.

Fig. 7 zeigt das Amplitudenbild 40 der Aufnahme, die in der in Fig. 5 gezeigten Situation aufgenommen wurde. Auf dem Amplitudenbild ist die Straße 34 sowie der Baum 35 zu erkennen. Hier wird zunächst eine Merkmalsdetektion durchgeführt. Vereinfachend soll angenommen werden, dass eine Merkmalsdetektion nach dem SURF-Algorithmus erfolgt, dass also Merkmale erkannt werden, die robust gegenüber Translation, Rotation, Skalierung und bis zu einem gewissen Grad affine Verzerrungen sind. In einem realen Bild würden hier eine Vielzahl von Merkmalen erkannt. Vereinfachend soll hier angenommen werden, dass nur vier Merkmale erkannt werden. Dies sind der Übergang des Baums zwischen Stamm und Krone 36, der Wipfel des Baums 37, dass der Straße zugewandte Ende der Krone 38 und dass der Straße abgewandte Ende der Krone 39.

Fig. 8 zeigt das Amplitudenbild 41 der Aufnahme, die in der in Fig. 6 gezeigten Situation aufgenommen ist. Auch hier ist die Straße 34 sowie der Baum 35 zu erkennen. Der Baum ist jedoch näher an dem Kraftfahrzeug, das heißt im Amplitudenbild ist er nach links gewandert und größer geworden. Vereinfachend soll angenommen werden, dass hier ebenfalls die Merkmale 36, 37, 38 und 39 erkannt wurden. Im nächsten Schritt werden diese Merkmale einander zugeordnet. Die Recheneinrichtung kann also bestimmen, dass das Merkmal 37 in Fig. 8 dem Merkmal 37 in Fig. 7 entspricht und so weiter. Nach der erfolgreichen 2D-Korrespondenzsuche werden diese Korrespondenzen nun auf 3D-Punkte übertragen. Damit sind der Recheneinrichtung nun die relativen Positionen der Punkte 36, 37, 38 und 39 zum Fahrzeug sowohl für die in Fig. 5 gezeigte Fahrsituation als auch für die in Fig. 6 gezeigte Fahrsituation bekannt. Dies ist dadurch angedeutet, dass diese Punkte auch in Fig. 6 und Fig. 7 eingezeichnet sind. Durch einen Vergleich der relativen Punktenpositionen kann nun leicht ermittelt werden, dass die Punkte geradelinig auf einer Achse, die parallel zur Fahrrichtung liegt, verschoben wurden, das heißt, dass sich das Fahrzeug relativ zum Baum auf einer rechts vom Baum laufenden Strecke vorwärts bewegt hat. Auf die gleiche Weise wäre jedoch auch eine Detektion einer seitlichen Verschiebung des Baums gegenüber des Kraftfahrzeugs oder einer Rotation des Baums detektierbar.

Eine Berechnung der Fahrzeugbewegung ist nun leicht möglich, in dem die Bewegung der Umgebung, in diesem Fall ausschließlich des Baums, da an keiner anderen Stelle verfolgbare Merkmale detektiert wurden, so zurück gerechnet wird, dass ausschließlich das Koordinatensystem verschoben und gedreht wird, und die Objekte, hier also der Baum ihre Position nicht ändern. Damit kann die Bewegung der Kamera bestimmt werden, die fest mit dem Fahrzeug verknüpft ist und damit die Bewegung des Kraftfahrzeugs.

Wie im Beispiel gezeigt, ist es möglich, durch Auswertung aufeinanderfolgender Aufnahmen einer Tiefenbildkamera die Bewegung eines Fahrzeugs zu bestimmen. Tiefenbildkameras haben häufig eine Entfernungsauflösung im Millimeterbereich. Damit ist eine sehr genaue Auflösung von Fahrbewegungen möglich, die wesentlich exakter ist als konventionelle Odometriemethoden.

## Patentansprüche

1. Verfahren zur Ermittlung der Bewegung eines Kraftfahrzeugs durch Auswertung mindestens zweier aufeinanderfolgender Aufnahmen mindestens einer am Kraftfahrzeug angeordneten Tiefenbildkamera, wobei jede Aufnahme zumindest ein Distanzbild und ein Amplitudenbild umfasst, umfassend die Schritte:
- Aufnahme von mindestens zwei zeitlich beabstandeten Aufnahmen mit der gleichen Tiefenbildkamera,
- Bestimmung einer 2D-Punktkorrespondenz zwischen den Amplitudenbildern mindestens zweier Aufnahmen für mindestens zwei Punkte,
- Bestimmung einer 3D-Punktkorrespondenz aus der 2D-Punktkorrespondenz und den Distanzwerten der Distanzbilder der mindestens zwei Aufnahmen für die mindestens zwei Punkte,
- Erzeugung einer 3D-Punktewolke für jede Aufnahme aus den jeweils mindestens zwei Punkten der Aufnahme für die eine 3D-Punktkorrespondenz bestimmt wurde,
- Ermittlung einer Transformation zwischen den mindestens zwei 3D-Punktewolken durch Registrierung der mindestens zwei Punkte der mindestens zwei 3D-Punktewolken, und
- Bestimmung der Bewegung der Kamera und damit des Kraftfahrzeugs zwischen den Aufnahmen aus der Transformation.

2. Verfahren nach Anspruch 1,
**dadurch gekennzeichnet,**
**dass** vor dem Schritt der Bestimmung einer 2D-Punktkorrespondenz das Amplitudenbild geglättet wird, insbesondere unter Verwendung eines bilateralen Filters.

3. Verfahren nach Anspruch 1 oder 2,
**dadurch gekennzeichnet,**
**dass** vor dem Schritt der Bestimmung der 3D-Punktkorrespondenz ein Gültigkeitsprüfungsschritt erfolgt, in dem für jeden Punkt jeder Aufnahme ein durch die Kamera gesetztes Gültigkeits-Flag ausgewertet wird und Punkte mit nicht gesetztem Gültigkeits-Flag als ungültig markiert und im weiteren Verfahren nicht berücksichtigt werden.

4. Verfahren nach einem der vorangehenden Ansprüche,
**dadurch gekennzeichnet,**
**dass** vor dem Schritt der Bestimmung der 3D-Punktkorrespondenz ein Kantenentfernungsschritt erfolgt, in dem mit einem Kantendetektionsalgorithmus, insbesondere einem Sobel-Kantendetektor, Kanten im Distanzbild detektiert werden und die an diesen Kanten liegenden Punkte als ungültig markiert und im weiteren Verfahren nicht berücksichtigt werden.

5. Verfahren nach einem der vorangehenden Ansprüche,
**dadurch gekennzeichnet,**
**dass** die Bestimmung einer 2D-Punktkorrespondenz durch Merkmalsdetektion mit einem SURF-Verfahren und anschließender Abgleichung der SURF-Deskriptoren und/oder einem Good Features to Track Ansatz, wobei Shi-Tomasi Merkmale detektiert und die Korrespondenz durch Berechnung eines optischen Flusses nach der Lucas-Kanade-Methode bestimmt wird, erfolgt.

6. Verfahren nach einem der vorangehenden Ansprüche,
**dadurch gekennzeichnet,**
**dass** die Registrierung zwischen den mindestens zwei 3D-Punktewolken durch eine Transformation mindestens einer der mindestens zwei 3D-Punktewolken mit einem Quaternionenbasierten Verfahren erfolgt, wobei die optimale Transformation durch eine Minimierung der Standardabweichung bestimmt wird.

7. Verfahren nach einem der vorangehenden Ansprüche,
**dadurch gekennzeichnet,**
**dass** jede 3D-Punktewolke mindestens drei Punkte umfasst und bei der Bestimmung der Transformation ein RANSAC-Algorithmus verwendet wird.

8. Verfahren nach einem der vorangehenden Ansprüche,
**dadurch gekennzeichnet,**
**dass** als Tiefenbildkamera eine Time of Flight Kamera verwendet wird.

9. Kraftfahrzeug, umfassend eine Recheneinrichtung (3) und mindestens eine Tiefenbildkamera (2), wobei die Recheneinrichtung (3) zur Durchführung eines Verfahrens nach den vorangehenden Ansprüchen ausgebildet ist.

10. Kraftfahrzeug nach Anspruch 9,
**dadurch gekennzeichnet,**
**dass** die Tiefenbildkamera eine Time of Flight Kamera (2) ist.

11. Kraftfahrzeug nach Anspruch 10,
**dadurch gekennzeichnet,**
**dass** die Time of Flight Kamera (2) einen PMD-Sensor als Bildsensor umfasst.
